# EUROPÄISCHE PATENTSCHRIFT

(11) **EP 1 873 480 B1**
(45) Veröffentlichungstag und Bekanntmachung des Hinweises auf die Patenterteilung: **30.11.2016**
(21) Anmeldenummer: 07012668.5
(22) Anmeldetag: 28.06.2007
(51) Int. Cl.: G02B 6/44, H02G 1/08, B65H 75/36, H02G 11/02

(54) **Prüf- und/oder Montagevorrichtung**
Testing and/or mounting device
Dispositif de vérification et/ou de montage

(30) Priorität: 29.06.2006 DE 202006010210 U
(43) Veröffentlichungstag der Anmeldung: 02.01.2008
(73) Patentinhaber: Katimex Cielker GmbH, 54584 Jünkerath (DE)
(72) Erfinder: Werner, Bauer, 54589 Stadtkyll (DE)
(74) Vertreter: Stenger Watzke Ring

(56) Entgegenhaltungen:
- EP-A- 0 597 529
- EP-A- 1 551 086
- EP-A1- 0 445 312
- EP-A1- 0 775 662
- EP-A2- 0 174 914
- DE-A1-102005 021 180
- DE-C1- 10 029 757
- US-A- 4 000 653
- US-A- 4 443 888
- US-A- 4 653 190

## Beschreibung

Die vorliegende Erfindung betrifft eine Prüf- und/oder Montagevorrichtung mit einer an einer Haltevorrichtung drehbar gelagerten Walzeneinheit.

Gattungsgemäße Montagevorrichtungen dienen beispielsweise zum Einziehen von Kabeln in Leerrohre, zur Durchgangsprüfung von Kanälen, in die Kabel oder dergleichen eingezogen werden sollen sowie auch zur Feststellung des Verlaufs eines Kanals, beispielsweise eines Leerrohres in einer Wand, einer Decke, einem Boden oder dergleichen. Eine Vorrichtung zum Einziehen von Kabeln in einen Kabelkanal, welcher in einem Gemäuer eines Bauwerks eingelassen ist, offenbart beispielsweise die DE 92 02 150 U1. Diese Vorrichtung weist ein zweischaliges Gehäuse und eine in diesem Gehäuse gelagerte Trommel zur aufwickelbaren Aufnahme eines biegeelastischen Schub- und Zugdrahtes auf, der durch einen aus der Trommel und dem Gehäuse gebildeten Ringspalt herausziehbar und wieder einschiebbar ist. Eine weitere derartige gattungsgemäße Vorrichtung offenbart darüber hinaus die EP 0 775 662 A1, die eine konstruktive Weiterbildung des vorgenannten deutschen Gebrauchsmusters betrifft. Aus der EP 0 445 312 A ist darüber hinaus eine Vorrichtung zum Verlegen von Kabeln oder flexiblen Rohren über eine Verlegungsstrecke mit einer Aufwickelvorrichtung und einer Antriebsvorrichtung für ein Zugmittel an dem einen Ende der Verlegungsstrecke und mit einer Kabeltrommel an dem anderen Ende der Verlegungsstrecke bekannt, wobei an einem äußeren Ende des Zugmittels ein Zugmesskopf befestigt ist, an welchem das zu verlegende Kabel befestigt werden kann. Der Zugmesskopf weist einen Dehnungsmessstreifen auf, mittels welchem die jeweilige Zug- oder Druckbelastung des Zugmittels bzw. des einzuziehenden Kabels überwacht werden kann, so dass eine unzulässig hohe Belastung vermieden wird. Der Dehnungsmessstreifen wirkt mit einer Verstärkerelektronik zusammen, welche über elektrische Leitungen mit einem elektronischen Auswerter an dem Gestell der Aufwickelvorrichtung angeordnet ist.

Zwar haben sich die bekannten Vorrichtungen für die Montage, das heißt für das Einziehen von Kabeln in dafür vorgesehene, bereits verlegte Kanäle, als gut verwendbar herausgestellt, jedoch besteht häufig ein Bedürfnis, sowohl eine Lage des Kabelkanals als auch eine momentane Position des Kabels im Kabelkanal während der Montage zu bestimmen. Darüber hinaus wäre es wünschenswert, die Position eines Kanals in Wänden, Decken, Fußböden und dergleichen mit Hilfe einer hierfür geeigneten Vorrichtung bestimmen zu können, insbesondere wenn im Bereich einer möglichen Position des Kabelkanals mechanische Arbeiten durchzuführen sind und der Kanal möglichst nicht beschädigt werden soll. Es sind zwar Leitungsdetektoren für in Wänden verlegte elektrische Leitungen bekannt, jedoch sind diese in der Regel hinsichtlich einer Lagebestimmung des Kanals in ihrer Genauigkeit begrenzt und oftmals an die Funktion weiterer Einrichtungen gekoppelt.

Der vorliegenden Erfindung liegt deshalb die Aufgabe zugrunde, eine gattungsgemäße Montagevorrichtung dahingehend weiterzubilden, daß sie nicht nur für Montagezwecke, sondern auch für Prüfzwecke, insbesondere Ortungszwecke, gut geeignet ist.

Als Lösung wird mit der vorliegenden Erfindung vorgeschlagen, daß an der Walzeneinheit ein erstes Ende eines biegeelastischen Kabels mit wenigstens einem Signalleiter aufwickelbar festgelegt ist, wobei der Signalleiter im Bereich des ersten Endes des Kabels mit einer drehfest gegenüber der Haltevorrichtung anordbaren Signaleinrichtung mittels einer Kopplungseinheit kommunikationstechnisch gekoppelt ist.

Auf diese Weise kann die erfindungsgemäße Vorrichtung vorteilhaft mit einer Vorrichtung zugleich eine Montage- sowie auch eine Prüf- und/oder Ortungsfunktion bereitstellen. Der Begriff Kabel soll im Sinne der vorliegenden Erfindung ein Seil oder dergleichen sein, welches entsprechende mechanische Eigenschaften aufweist, und zwar unabhängig von elektrischen, chemischen oder weiteren physikalischen Eigenschaften. Die Ausrüstung des biegeelastischen Kabels mit einem Signalleiter ermöglicht es, die Vorrichtung nicht nur für die Montage zu nutzen, sondern darüber hinaus auch den Montagefortschritt beziehungsweise auch eine Kanallage zu ermitteln. Sollte sich beispielsweise beim Durchführen des biegeelastischen Kabels durch einen Kanal ein Hindernis in den Weg stellen, so kann mit Hilfe des Signalleiters die Position des Hindernisses ermittelt werden. Der Signalleiter kann aus einer Einzeldrahtleitung oder auch aus einer Mehrdrahtleitung gebildet sein. Bei der Verwendung einer Mehrdrahtleitung kann vorgesehen sein, daß eine Leitung für ein Signal in eine Richtung vorgesehen ist und eine weitere Leitung für ein Signal in eine Gegenrichtung. Der Begriff "Signal" ist dabei so zu verstehen, daß eine physikalische Größe für Prüf- und Ortungszwecke bereitgestellt wird. Insofern unterscheidet sich der in diesem Zusammenhang definierte Begriff des Signals von dem Begriff Energieübertragung, was für das Verständnis der Erfindung und der weiteren Beschreibung von Bedeutung ist. Die Haltevorrichtung kann durch ein Gestell oder auch ein Gehäuse gebildet sein, welches die Walzeneinheit in ihrer räumlichen Position vorgebbar hält. Die Haltevorrichtung kann zum Stellen oder Befestigen geeignete Zusatzelemente aufweisen. Sie kann aber auch Griff- und Betätigungselemente aufweisen, insbesondere wenn die Vorrichtung tragbar ausgebildet ist. Die Walzeneinheit weist eine Walze auf, die gegenüber der Haltevorrichtung drehbar gelagert ist. An der Walze können weitere Mittel zur Führung oder zum Festlegen des Kabels vorgesehen sein. Es kann auch ein Antrieb vorgesehen sein, mit dem die Walze gegenüber der Haltevorrichtung drehbar antreibbar ist. Die Walze, an der ein Ende des Kabels befestigt ist, kann zylindrisch, kegelstumpfförmig oder durch eine andere rotationssymmetrische Form ausgebildet sein. Daneben kann sie auch eine eckige Grundform aufweisen, insbesondere in Form eines regelmäßigen Mehrecks als Grundfläche. Die Form der Walze ist vorzugsweise an die Wickeleigenschaften des Kabels angepaßt.

Der Signalleiter dient zur Führung, Abstrahlung und/oder Empfang eines Signals. Das Signal selbst wird von einer Signaleinrichtung erzeugt, die drehfest gegenüber der Haltevorrichtung angeordnet ist. Sie kann entweder an der Haltevorrichtung angeordnet sein oder auch mit ihr verbunden sein oder sie kann als separate Einrichtung über eine Kommunikationsleitung mit der Haltevorrichtung in Verbindung stehen. Die Haltevorrichtung und die Signaleinrichtung können einstückig ausgebildet sein. Das Signal selbst kann entweder elektrischer, optischer, kapazitiver oder elektromagnetischer Natur sein. Der Signalleiter ist vorzugsweise an die Übertragungseigenschaften des Signals angepaßt ausgebildet.

Um das Signal von der Signaleinrichtung in den Signalleiter und umgekehrt einzukoppeln, weist die Vorrichtung eine Kopplungseinheit auf, die die kommunikationstechnische Kopplung zwischen dem Signalleiter und der Signaleinrichtung bewirkt. Die Kopplungseinheit ist ebenfalls an die physikalischen Signaleigenschaften angepaßt. Die Kopplungseinheit ermöglicht es, das Signal in den Signalleiter zu koppeln, und zwar unabhängig von der Position der Walzenstellung gegenüber der Haltevorrichtung. Auch während der Drehung der Walze kann die Kopplung zwischen Signaleinrichtung und Signalleiter gewährleistet werden. Die Signaleinrichtung weist zur Signalerzeugung eine Energiequelle auf, die beispielsweise durch einen Akkumulator oder eine Batterie gebildet sein kann. Daneben kann vorgesehen sein, daß die Energie aus einer öffentlichen Energieversorgung bereitgestellt wird.

Das Kabel selbst kann eine für die Anwendung geeignete Querschnittsform aufweisen. Vorzugsweise ist die Querschnittsform kreisförmig oder elliptisch. Sie kann natürlich auch andere geeignete Formen aufweisen, die an den vorgesehenen Anwendungszweck angepaßt sind. Das Kabel selbst ist biegeelastisch, so daß es auf die Walze aufgewickelt werden kann.

In einer Ausgestaltung wird vorgeschlagen, daß der Signalleiter von einem Werkstoff des Kabels umgeben ist. Auf diese Weise ist der Signalleiter vor mechanischen Beanspruchungen geschützt. Darüber hinaus kann der Signalleiter einen kleinen Querschnitt aufweisen, da mechanische Beanspruchungen im wesentlichen durch das Kabel aufgefangen werden. Der Signalleiter kann deshalb hinsichtlich seiner Funktion optimal ausgebildet werden.

Es wird weiterhin vorgeschlagen, daß das Kabel einen Glasfaser- und/oder Karbonfaserverbund aufweist. Auf diese Weise kann neben der Biegeelastizität eine hohe Widerstandsfähigkeit gegen mechanische und chemische Beanspruchungen erreicht werden. Das Kabel kann auf diese Weise nicht nur für hohe Schub- und Zugbelastungen ausgebildet sein, sondern es kann darüber hinaus auch eine hohe Belastbarkeit hinsichtlich Scherbeanspruchungen aufweisen.

In einer Weiterbildung wird vorgeschlagen, daß das Kabel schubsteif ausgebildet ist. Dies ermöglicht es, das Kabel auch in einem engen oder mit Hindernissen versehenen Kanal einzuführen, ohne daß das in den Kanal einzuführende Ende am Hindernis hängenbleibt und sich das darauffolgende Kabel mäander- oder schlaufenförmig zusammenschiebt.

Es wird ferner vorgeschlagen, daß der Signalleiter aus einem elektrisch leitfähigen Werkstoff gebildet ist. Auf diese Weise kann vorteilhaft ein elektrisches Signal verwendet werden, um die Ortungs- und/oder Prüffunktion ausführen zu können. Mit geringem Aufwand kann eine Vielzahl von auf die Anwendung geeigneten Signalen erzeugt werden. Natürlich können grundsätzlich auch weitere Signalarten zum Einsatz kommen, beispielsweise magnetische, optische, elektrostatische oder dergleichen.

Gemäß einer weiteren vorteilhaften Ausgestaltung weist das Kabel an seinem zweiten Ende ein Anschlagelement auf. Das Anschlagelement kann durch einen Flansch oder eine andere mechanische Ausgestaltungsform gebildet sein, die es erlaubt, das Kabel abrollbereit in der Vorrichtung zu halten. Durch das Anschlagelement kann verhindert werden, daß das zweite Kabelende beim Aufrollen vollständig auf die Walze aufgewickelt wird und ein Nutzer bei einer folgenden Verwendung zunächst das Kabelende suchen und gegebenenfalls zum Ergreifen freilegen muß. Die Bedienbarkeit der Vorrichtung kann verbessert werden.

Darüber hinaus wird vorgeschlagen, daß die Haltevorrichtung eine Führungseinheit aufweist. Mit der Führungseinheit kann erreicht werden, daß das Kabel sowohl beim Abrollen als auch beim Aufrollen bezüglich einer axialen Position auf der Walze geführt wird, so daß einerseits ein einfaches Abrollen des Kabels von der Walze erreicht werden kann und andererseits beim Aufrollen eine möglichst kompakte und dichte Lage der Windungen erreicht werden kann. Durch die saubere und gleichmäßige Lage der Windungen ist ferner eine gleichmäßige, von Knicken und Biegungen unbehinderte Längserstreckung erreichbar, die das Durchführen des Kabels durch einen Kanal erleichtert, insbesondere bei Schubbewegungen. Die Führungseinheit kann durch eine parallel zur Walzenachse axial antreibbare Öse oder dergleichen gebildet sein, durch die das Kabel hindurchgeführt ist.

Es wird ferner vorgeschlagen, daß die Haltevorrichtung eine Aufrolleinheit aufweist. Mit der Aufrolleinheit kann das Kabel automatisch wieder auf die Walze aufgerollt werden. Die Aufrolleinheit kann durch eine Spiralfeder, insbesondere eine Rollfeder, gebildet sein. Sie kann natürlich auch einen motorischen Antrieb aufweisen.

In einer weiteren Ausgestaltung weist das Kabel im Bereich seines zweiten Endes eine Klemmeinheit auf. Vorzugsweise ist die Klemmeinheit dazu vorgesehen, ein weiteres Kabelende einer durch einen Kanal durchzuziehenden Leitung zu ergreifen und festzulegen. Die Klemmeinheit kann durch Klemmbacken, Schraubklemmen und dergleichen gebildet sein. Natürlich können auch andere Gegenstände mit der Klemmeinheit verbunden sein, die durch einen Kanal hindurchgeführt werden sollen, beispielsweise Reinigungs- und/oder Reparatureinrichtungen für den Kanal oder dergleichen.

In einer vorteilhaften Weiterbildung weist das Kabel im Bereich seines zweiten Endes eine Sendeeinheit auf. Vorzugsweise ist die Sendeeinheit für den Betrieb mit einem elektrischen Signal vorgesehen. Der Signalleiter steht dazu mit der Sendeeinheit in Kommunikationsverbindung. Das Signal wird über den Signalleiter zur Sendeeinheit geführt und veranlaßt diese zur Aussendung eines leitungsungebundenen Signals. Daneben kann vorgesehen sein, daß das Signal durch die Sendeeinheit erst umgeformt wird, damit es leitungsungebunden ausgesendet werden kann. Im elektrischen Fall kann die Sendeeinheit beispielsweise durch eine elektronische Spule, eine Kondensatorelektrode oder dergleichen gebildet sein.

Darüber hinaus wird vorgeschlagen, daß das Kabel im Bereich seines zweiten Endes eine Sensoreinheit aufweist. Diese kann beispielsweise dazu vorgesehen sein, leitungsungebundene Signale zu detektieren und direkt oder nach Umformung in den Signalleiter einzukoppeln. Es kann auch vorgesehen sein, daß die Detektion eines leitungsungebundenen Signals zur Aussendung eines Signals der Sensoreinheit über den Signalleiter erfolgt. So kann beispielsweise anhand eines Signalpegels die Position des zweiten Endes des Kabels ermittelt werden, wenn die Position einer Signalquelle für ein leitungsungebundenes Signal, welches durch die Sensoreinheit erfaßt werden kann, bekannt ist. Die Sensoreinheit kann beispielsweise ebenfalls durch eine elektronische Spule, eine Antenneneinheit, eine Kondensatorelektrode oder dergleichen gebildet sein.

In einer weiteren Ausgestaltung wird vorgeschlagen, daß die Kopplungseinheit wenigstens zwei in elektrischer, kapazitiver und/oder induktiver Wirkverbindung stehende, elektrisch leitfähige Kopplungselemente aufweist, wobei eines der Kopplungselemente mit dem Signalleiter und das zweite mit der Signaleinrichtung in elektrischer Verbindung steht. Die Kopplungselemente sind so zueinander angeordnet, daß eine Kopplung für das Signal auf dem Signalleiter erfolgen kann. Vorzugsweise sind die Kopplungselemente so ausgestaltet, daß eine Kopplung bidirektional erfolgen kann. Die Kopplungselemente können durch Elektroden gebildet sein, die mechanisch benachbart angeordnet sind, und zwar derart, daß eine Bewegung zwischen Haltevorrichtung und Walze ermöglicht wird, ohne daß die Kopplung zwischen den Kopplungselementen behindert wird.

In einer Weiterbildung wird vorgeschlagen, daß wenigstens ein Kopplungselement ringförmig ausgebildet ist. Auf diese Weise kann eine Kopplung unabhängig von der Walzenposition zwischen den Kopplungselementen erreicht werden. Das ringförmige Kopplungselement kann entweder an der Walze selbst oder auch an der Haltevorrichtung vorgesehen sein. Das zweite Kopplungselement ist dann an der jeweils anderen Vorrichtung angeordnet. Gerade bei Anordnung an der Walze kann erreicht werden, daß das Kopplungselement ein im wesentlichen symmetrisches Drehmoment der Walze hinsichtlich der Symmetrie im wesentlichen nicht beeinträchtigt. Natürlich können auch beide Kopplungselemente ringförmig ausgebildet sein, wobei sie vorzugsweise gegenüberliegend angeordnet sind. Das Kopplungselement kann einstückig mit der Walze oder der Haltevorrichtung ausgebildet sein. Es kann aber auch als separates Bauelement mittels bekannter Befestigungstechniken an der Walze und/oder der Haltevorrichtung festgelegt sein. Die Kopplungselemente können mit einer Beschichtung versehen sein, um sie gegen mechanische, chemische oder andere physikalische Beeinträchtigungen zu schützen. Die Beschichtung kann beispielsweise durch einen Lack, der leitfähig sein kann oder auch eine Metallschicht, insbesondere eine Legierung oder dergleichen gebildet sein. Vorzugsweise werden als Legierungen insbesondere robuste, korrosionsfeste Legierungen oder Metalle verwendet, wie beispielsweise Gold, Platin, Messing oder dergleichen. Vorzugsweise ist das Kopplungselement aus einem harten beziehungsweise gehärteten Werkstoff.

In einer Ausgestaltung wird vorgeschlagen, daß die Kopplungselemente einen Transformator bilden. Auf diese Weise kann durch drahtlose Kopplung eine Signalübertragung mit der Kopplungseinheit erreicht werden. Die Transformatorwirkung kann beispielsweise dadurch erreicht werden, daß zwei gegenüberliegende ringförmige Kopplungselemente vorgesehen sind, die einen elektrischen Leiter in Form einer Spule aufweisen und entsprechend verschaltet sind. Durch den bekannten Transformatoreffekt kann das Signal übertragen werden. Eine zuverlässige, robuste Ausführung kann erreicht werden.

Darüber hinaus wird vorgeschlagen, daß wenigstens ein Kopplungselement im wesentlichen stiftförmig ausgebildet ist. Diese Ausgestaltung erweist sich insbesondere dann als vorteilhaft, wenn eine kontaktbasierte Kopplung erwünscht ist. Dies ist insbesondere bei sehr energieschwachen Signalen vorteilhaft, zu deren störungssicherer Übertragung ansonsten zusätzlicher Verstärkungs- und Verarbeitungsaufwand erforderlich wäre. Vorzugsweise ist das Kontaktelement elektrisch leitfähig ausgebildet und im leitenden Kontakt mit dem gegenüberliegenden Kopplungselement. Dieses ist ringförmig ausgebildet, so daß das stiftförmige Kopplungselement unabhängig von der Walzenstellung gegenüber der Haltevorrichtung einen Kontakt mit dem gegenüberliegenden Kopplungselement herstellen kann. Dabei ist es unerheblich, welches Kopplungselement an der Walze oder an der Haltevorrichtung angeordnet ist.

Um einen guten Kontakt während des bestimmungsgemäßen Betriebs zu gewährleisten, ist das stiftförmige Kontaktelement radial verschiebbar und in Richtung ringförmigem Kopplungselement durch eine Kraft vorgespannt. Diese kann durch ein geeignetes Federelement aufgebracht werden. Um das erforderliche Drehmoment zum Betrieb der Walze gegenüber der Haltevorrichtung möglichst gering zu halten, kann das stiftförmige Kontaktelement so ausgebildet sein, daß es nur mit einer geringen Fläche und/oder einer geringen Kraft gegen das gegenüberliegende Kopplungselement drückt. Hierzu kann das entsprechende Ende des stiftförmigen Kopplungselements beispielsweise kuppenförmig, pyramidenförmig, kegelförmig oder dergleichen ausgebildet sein. Besonders vorteilhaft erweist es sich für die Zuverlässigkeit der Vorrichtung, wenn wenigstens eines der Kopplungselemente mit einer Oberfläche versehen ist, die nicht nur zu einer geringen Reibung führt, sondern darüber hinaus auch zu einem geringen Abrieb. Derartige Werkstoffkombinationen sind aus der Meßtechnik hinreichend bekannt. So kann beispielsweise vorgesehen sein, daß das gegenüberliegende Kopplungselement, welches vorzugsweise ringförmig ausgebildet sein kann, stiftseitig mit einer Karbonschicht beschichtet ist, die sich bei Regel- und Steuergeräten durch eine hohe Zuverlässigkeit und Störsicherheit auszeichnet.

In einer weiteren Ausgestaltung wird vorgeschlagen, daß das stiftförmige Kopplungselement im wesentlichen radial zur Walze verschiebbar gelagert ist. Hierdurch kann erreicht werden, daß das stiftförmige Kopplungselement im wesentlichen einen guten Kontakt zum gegenüberliegenden Kopplungselement herstellen kann. Darüber hinaus kann erreicht werden, daß, wenn das Kopplungselement in radialer Richtung zum gegenüberliegenden Kopplungselement mit einer Kraft vorgespannt ist, Verschleiß aufgrund von Abrieb und dergleichen ausgeglichen werden kann. Die Zuverlässigkeit kann weiter erhöht werden. Vorzugsweise ist das Kopplungselement mittels eines Federelements, wie einer Spiralfeder, einer Tellerfeder oder dergleichen, radial vorgespannt.

Gemäß einem weiteren Vorschlag der Erfindung ist das Kopplungselement durch ein Kontaktelement gebildet. In dieser Ausgestaltung kann vorteilhaft auch ein Signal mit geringem Energieinhalt ohne großen Signalverarbeitungsaufwand durch die Kopplungseinheit übertragen werden. Vorzugsweise steht das Kontaktelement in direktem elektrischen Kontakt mit einem gegenüberliegenden Kontaktelement. Die Kotaktelemente können aus bekannten elektrisch leitfähigen Werkstoffen gebildet sein, insbesondere natürlich Metalle wie Kupfer, Aluminium, Silber oder weitere sowie deren Legierungen oder dergleichen. Natürlich kommen auch Verbundmaterialien, beispielsweise elektrisch leitfähige Keramik- oder Kunststoffwerkstoffe, in Betracht, insbesondere faserverstärkte Verbundwerkstoffe.

Weiterhin wird vorgeschlagen, daß das Kontaktelement in einem Kontaktbereich eine Wölbung aufweist. Dies ermöglicht es, aufgrund von Reibung verursachte Widerstandsmomente beim Drehen zu reduzieren. Zugleich kann die Reibung und der Verschleiß reduziert werden. Die Zuverlässigkeit kann weiter verbessert werden.

In einer weiteren Ausgestaltung wird vorgeschlagen, daß wenigstens ein Kontaktelement zumindest im Kontaktbereich eine Beschichtung aufweist. Die Beschichtung ist aus einem elektrisch leitfähigen Werkstoff gebildet, so daß das Kontaktelement mit dem gegenüberliegenden Kontaktelement in elektrischen Kontakt treten kann. Natürlich können auch beide Kontaktelemente eine Beschichtung aufweisen, wobei darüber hinaus für die Kontaktelemente unterschiedliche Beschichtungen vorgesehen sein können. So kann beispielsweise ein stiftförmiges Kontaktelement im Kontaktbereich eine Beschichtung aus einer Beryllium-Kupfer-Legierung aufweisen, wohingegen das gegenüberliegende Kontaktelement mit einer gehärteten Karbonschicht beschichtet ist. Auf diese Weise kann eine zuverlässige, dauerhafte und robuste Kopplungseinheit erreicht werden.

In einer Weiterbildung der vorliegenden Erfindung wird vorgeschlagen, daß das Kontaktelement stiftförmig ausgebildet und durch eine axiale Bewegung der Walzeneinheit in Bezug auf die Haltevorrichtung radial verschiebbar ist. Diese Ausgestaltung ermöglicht es, zu Montage- oder Wartungszwecken die Walzeneinheit auf einfache Weise von der Haltevorrichtung zu trennen. Dazu kann vorgesehen sein, daß das stiftförmige Kontaktelement eine oder mehrere Rampen aufweist, die mit entsprechenden Ausgestaltungen an der Haltevorrichtung wechselwirken können, so daß das stiftförmige Kontaktelement beim axialen Verschieben der Walzeneinheit radial verschoben wird, so daß die Walzeneinheit frei aus der Haltevorrichtung entfernt werden kann. Natürlich kann eine solche Rampe anstelle oder zusätzlich zur Anordnung am Kontaktelement auch an der Haltevorrichtung vorgesehen sein. Auch eine duale Anordnung kann vorgesehen sein, wobei das Kontaktelement nicht an der Walzeneinheit, sondern statt dessen an der Haltevorrichtung angeordnet ist. Insbesondere, wenn das stiftförmige Kontaktelement in Richtung des gegenüberliegenden Kontaktelements durch eine Kraft vorgespannt ist, kann eine einfache und sichere Montage der Walzeneinheit erreicht werden, ohne daß das stiftförmige Kontaktelement beschädigt werden müßte. Vorteilhaft ist diese Ausgestaltung darüber hinaus dann, wenn das stiftförmige Kontaktelement zugleich die Walzeneinheit in ihrer axialen Position gegenüber der Haltevorrichtung festlegt. Diese Ausgestaltung hat nämlich den weiteren Vorteil, daß zusätzliche Mittel zur Festlegung der Walzeneinheit in ihrer axialen Position in Bezug auf die Haltevorrichtung eingespart werden können. Kosten können eingespart werden.

Weitere Merkmale und Vorteile sind der folgenden Beschreibung eines Ausführungsbeispiels zu entnehmen. Die Ausführungsbeispiele dienen lediglich der Erläuterung der Erfindung und sind für diese nicht beschränkend. Es zeigen:
- Fig. 1: eine Vorrichtung zum Aufnehmen und Abziehen eines biegeelastischen strangförmigen Materials in einer perspektivischen Explosionsdarstellung sowie einer perspektivisch dargestellten Ansicht,
- Fig. 2: die Vorrichtung gemäß Fig. 1 in einer Draufsicht,
- Fig. 3: die Vorrichtung gemäß den Figuren 1 und 2 in einer geschnitten dargestellten Seitenansicht,
- Fig. 4: einen Schleifringüberträger für die Vorrichtung gemäß den Figuren 1 bis 3 in Seitenansicht,
- Fig. 5: ein strangförmiges Material im Querschnitt,
- Fig. 6: ein freies Ende des strangförmigen Materials in geschnitten dargestellter Seitenansicht,
- Fig. 7: eine Draufsicht auf ein Gehäuse einer erfindungsgemäßen Vorrichtung,
- Fig. 8: einen Schnitt durch einen Teil des Gehäuses nach Fig. 7 und
- Fig. 9: eine vergrößerte Darstellung des Bereichs IX in Fig. 8.

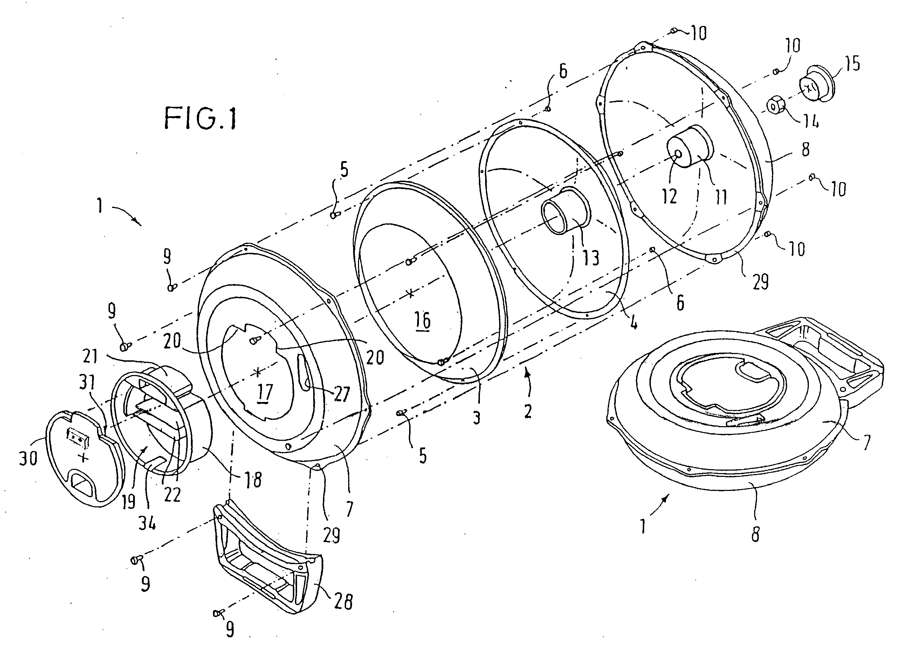

In der Figur 1 ist eine Vorrichtung 1 zum Aufnehmen und Abziehen eines nicht näher dargestellten biegeelastischen strangförmigen Kabels 39, nämlich eines Schub- und Zugdrahtes aus Glasfaserkunststoff zum Einziehen von Kabeln. Lichtleitern oder dergleichen in Kabel- oder Leitungsschutzrohre oder Leerrohre dargestellt. Die Vorrichtung besteht aus einer die Walzeneinheit bildenden Speichertrommel 2, welche durch zwei im Querschnitt kreisförmig ausgebildete Schalen 3 und 4 gebildet ist, die mittels Schraubbolzen 5 und Muttern 6 miteinander verschraubt sind. In der Speichertrommel 2 ist der Schub- und Zugdraht in Windungen am Innenumfang der Schalen 3 und 4 anliegend angeordnet.

Die Speichertrommel 2 ist innerhalb eines die Haltevorrichtung bildenden Gehäuses angeordnet, welches aus zwei Schalen 7 und 8 besteht, die mit Schraubbolzen 9 und Muttern 10 miteinander verschraubt sind. Die Speichertrommel 2 ist hierbei um die Mittelachse der beiden Schalen 7 und 8 drehbar in dem Gehäuse gelagert. Hierzu weist die Schale 8 an ihrer Innenfläche eine angeformte Achse 11 auf, die im wesentlichen hohlzylindrisch ausgebildet ist und im Bodenbereich eine Bohrung 12 zur Aufnahme eines Bolzens hat. Die Schale 4 der Speichertrommel 2 weist darüber hinaus einen in den inneren Raum der Speichertrommel 2 gerichteten und auf der Innenfläche der Schale 4 befestigten hohlzylindrischen Ansatz 13 auf, dessen Innendurchmesser dem Außendurchmesser der Achse 11 entspricht, so dass die Schale 4 drehbar auf der Achse 11 angeordnet werden kann.

Aus der Figur 1 ist ferner zu erkennen, dass eine außenseitig im Bereich der Achse 11 angeordnete Öffnung zur Aufnahme einer Mutter 14 dient, welche auf einen nicht dargestellten Schraubbolzen aufschraubbar ist, mit dem die Schale 4 der Speichertrommel 2 an der Schale 8 des Gehäuses befestigbar ist. Die die Mutter 14 aufnehmende Öffnung in der Schale 8 des Gehäuses wird mit einer Kappe 15 abgedeckt, wobei der die Mutter 14 aufnehmende Hohlraum in der Schale 8 des Gehäuses auch als Aufnahmeraum für Werkzeug, Werkstoffe und/oder Zubehör dienen kann.

Wie ferner aus der Figur 1 zu erkennen ist, weist die Schale 3 der Speichertrommel 2 eine der Schale 7 des Gehäuses zugewandte Öffnung 16 auf. Schließlich ist auch in der Schale 7 des Gehäuses eine zentrisch angeordnete Öffnung 17 vorhanden, in welche ein als topfförmiger Einsatz 18 ausgebildeter Aufnahmeraum 19 einsetzbar ist. Die Öffnung 17 ist hierzu im wesentlichen kreisförmig ausgebildet und weist zwei Vorsprünge 20 auf, die in den Innenraum der Öffnung 17 ragen und mit einem Vorsprung 21 zusammenwirken, der an der Umfangsfläche des Einsatzes 18 angeordnet ist. Durch die Vorsprünge 20 und 21 wird der Einsatz 18 lagegenau in der Schale 7 des Gehäuses gehalten.

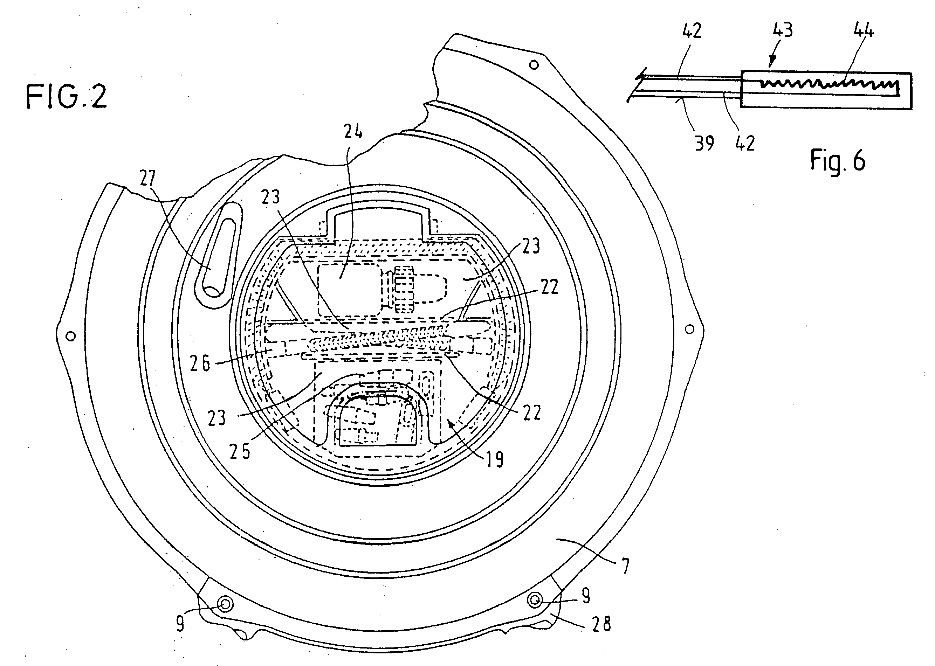

Im Aufnahmeraum 19 sind Zwischenwandungen 22 angeordnet, die den Aufnahmeraum 19 in mehrere Abschnitte 23 unterteilen, wobei jeder Abschnitt 23 des Aufnahmeraums 19 zur Aufnahme unterschiedlicher Werkzeuge, Werkstoffe und/oder Zubehör vorgesehen ist. In der Figur 2 ist beispielsweise zu erkennen, dass der obere Abschnitt 23 des Aufnahmeraums 19 der Aufnahme einer Kunststoffflasche 24 mit Gleitmittel dient. Der untere Abschnitt 23 ist demgegenüber mit verschiedenen Kupplungselementen 25 befüllt. Zwischen dem oberen Abschnitt 23 und dem unteren Abschnitt 23 ist ein weiterer Abschnitt 23 vorgesehen, in dem biegeelastische stabförmige Aufsatzelemente 26 angeordnet sind, die mit dem aus der Vorrichtung 1 herausragenden Ende des Schub- und Zugdrahtes verbindbar, insbesondere verschraubbar sind.

Der Schub- und Zugdraht ist durch eine im Außenrandbereich der Kappe 7 des Gehäuses angeordnete Öffnung 27 geführt, durch welche der Schub- und Zugdraht in die Vorrichtung 1 einschiebbar und aus dieser herausziehbar ist. Ferner weist die Vorrichtung 1 einen Handgriff 28 auf, der am Gehäuse der Vorrichtung 1 anschraubbar ist, wobei der Handgriff 28 einen Randbereich 29 der Schalen 7 und 8 übergreift.

Schließlich weist die Vorrichtung 1 noch einen Deckel 30 auf, mit dem der Aufnahmeraum 19 abdeckbar ist. Der Deckel 30 hat zwei kolinear angeordnete Steckachsen 31, die in korrespondierende Öffnungen im Einsatz 18 eingesteckt sind, so dass der Deckel 30 um die Steckachsen 31 relativ zum Einsatz 18 verschwenkbar ist. In seiner geöffneten Endstellung rastet der Deckel 30 ein, so dass zum Schließen des Deckels 30 ein erhöhter Kraftaufwand notwendig ist, mit dem der Deckel 30 aus seiner Raststellung gedrückt wird.

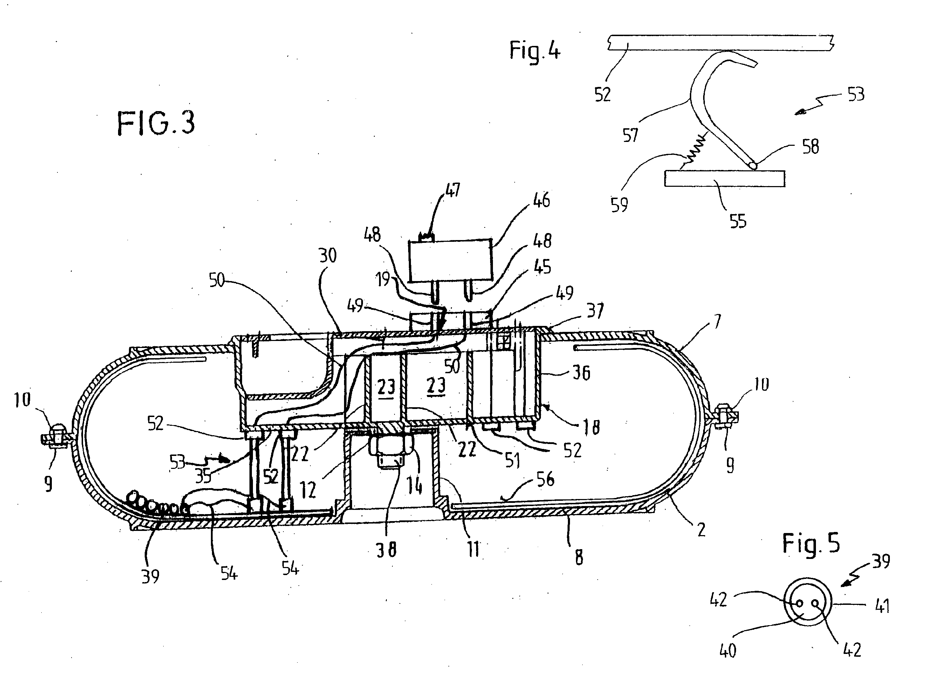

Aus der Figur 3 ist zu erkennen, dass der Deckel 30 eine als Fingeransatz dienende Eingrifföffnung 32 aufweist, die den Steckachsen 31 diametral gegenüberliegend angeordnet ist. Darüber hinaus ist zu erkennen, dass der Deckel 30 im Bereich der Eingrifföffnung 32 einen stegförmigen Vorsprung 33 hat, welcher mit einer Ausnehmung 34 an der Innenfläche des Aufnahmeraums 19 zusammenwirkt, nämlich dahingehend, dass einerseits der Deckel 30 im geschlossenen Zustand in der Ausnehmung 34 lagegerecht geführt ist und andererseits, dass zwischen dem Vorsprung 33 und der Ausnehmung 34 eine kraftschlüssige Verbindung besteht, die den Deckel 30 in seiner Schließstellung hält.

Insbesondere aus der Figur 3 ist die topfförmige Ausgestaltung des Einsatzes 18 zu erkennen. Der Einsatz 18 weist demzufolge einen Boden 35 und eine ringförmige Seitenwandung 36 auf, die an ihrem, dem Boden 35 gegenüberliegenden Ende, einen Ansatz 37 hat, welcher auf der Oberfläche der Schale 7 des Gehäuses aufliegt. Zur Vereinfachung ist in der Figur 3 die Speichertrommel 2, welche innerhalb des aus den Schalen 7 und 8 gebildeten Gehäuses angeordnet ist, nicht dargestellt.

Im Bereich des Bodens 35 weist der Einsatz 18 einen angeformten Bolzen 38 auf, der durch die Bohrung 12 im Boden der Achse 11 gesteckt und mit der Mutter 14 verschraubt ist. Somit ist der Einsatz 18 mit der Schale 8 des Gehäuses verbunden, so dass der Einsatz 18 unverlierbar im Gehäuse angeordnet ist.

In den Abschnitten 23 kann ferner ein nicht dargestelltes Element angeordnet sein, in welchem Ausnehmungen ausgebildet sind, deren Kontur mit der Außenkontur des aufzunehmenden Werkzeugs, Werkstücks oder Zubehörteils übereinstimmt. Beispielsweise kann dieses Element als Schaumstoffblock ausgebildet sein. Es ist aber auch möglich, dass dieses Element aus einem zähhartem Kunststoff besteht, der bei seiner Herstellung in die entsprechende Form gegossen oder gezogen wird. Diese Ausgestaltung hat insbesondere den Vorteil, dass die aufzunehmenden Werkzeuge, Werkstücke oder Zubehörteile lagegenau in dem Aufnahmeraum 19 angeordnet werden, so dass einerseits der Anwender eine übersichtliche Anordnung der Werkzeuge, Werkstücke und Zubehörteile vorfindet und andererseits diese Teile derart in dem Aufnahmeraum 19 angeordnet sind, dass sie auch bei geöffnetem Deckel 30 nicht aus dem Aufnahmeraum 19 herausfallen. Zwischen dem Element und den voranstehend genannten Zubehörteilen besteht somit eine reibschlüssige Verbindung, die insbesondere durch die Formgebung der Aufnahmen und das gewählte Material für das Element erzielbar ist.

Die Speichertrommel 2 ist relativ zum Gehäuse verdrehbar gelagert. Das in der Speichertrommel 2 angeordnete Kabel 39 ist in Figur 5 im Querschnitt dargestellt und besteht aus einem Glasfaserstab 40 und einer Ummantelung 41. In dem Glasfaserstab 40 sind in der Mittelachsebene zwei Signalleiter 42 angeordnet, die elektrisch leitend sind.

Gemäß Figur 6 ist an einem freien Ende 43 des Kabels 39 eine Sendeeinheit in Form einer Spule 44 angeordnet, wobei die Spule 44 mit ihren beiden Anschlüssen jeweils an einen Signalleiter 42 angeschlossen ist.

In Figur 3 ist zu erkennen, dass im Bereich des Deckels 30 eine Anschlußbuchse 45 angeordnet ist, die mit einer Signaleinrichtung 46 verbindbar ist. Die Signaleinrichtung 46 weist einen Schiebeschalter 47 auf, mit dem von einem einpoligen zu einem zweipoligen Betrieb umgeschaltet werden kann, um entweder im zweipoligen Betrieb über die Spule 44 den Endpunkt des Kabels 39 mittels eines Empfängers zu orten oder im einpoligen Betrieb den Verlauf des Kabels in einem Leerrohr feststellen zu können.

Die Signaleinrichtung 46 weist zwei Steckkontakte 48 auf, die in korrespondierende Steckeröffnungen 49 der Anschlußbuchse 45 einsteckbar sind. Die Steckeröffnungen 49 sind über Zuleitungen 50 mit ringförmig an einer der Speichertrommel 2 zugewandten Oberfläche 51 angeordneten Energieschienen 52 verbunden und übertragen somit das elektrische Signal der Signaleinrichtung 46 von der Anschlußbuchse 45 auf die Energieschienen 52, die parallel zueinander verlaufend ausgerichtet sind.

Mit den Energieschienen 52 in konstantem Kontakt stehen zwei Energieabnehmer 53, deren genaue Konstruktion in Figur 4 dargestellt ist. Die Energieabnehmer 53 sind über Zuleitungen 54 mit den Signalleitern 42 im Kabel 39 verbunden.

Jeder Energieabnehmer 53 besteht aus einem aus elektrisch leitenden Material gefertigten Fuß 55, der mit einer Fläche 56 der Speichertrommel 2 verbunden ist.

An dem Fuß 55 ist ein im wesentlichen L-förmig ausgebildeter Bügel 57 aus elektrisch leitendem Material über ein Gelenk 58 zumindest begrenzt schwenkbeweglich angeordnet. Zwischen dem Fuß 55 und dem Bügel 57 ist eine Druckfeder 59 vorgesehen, die den Bügel 57 in Richtung der Energieschiene 52 drückt, so dass ein konstanter Schleifkontakt zwischen dem Bügel 57 und der Energieschiene 52 hergestellt wird.

Die Kombination aus der Energieschiene 52 und dem Energieabnehmer 53 ist somit als Schleifringüberträger ausgebildet.

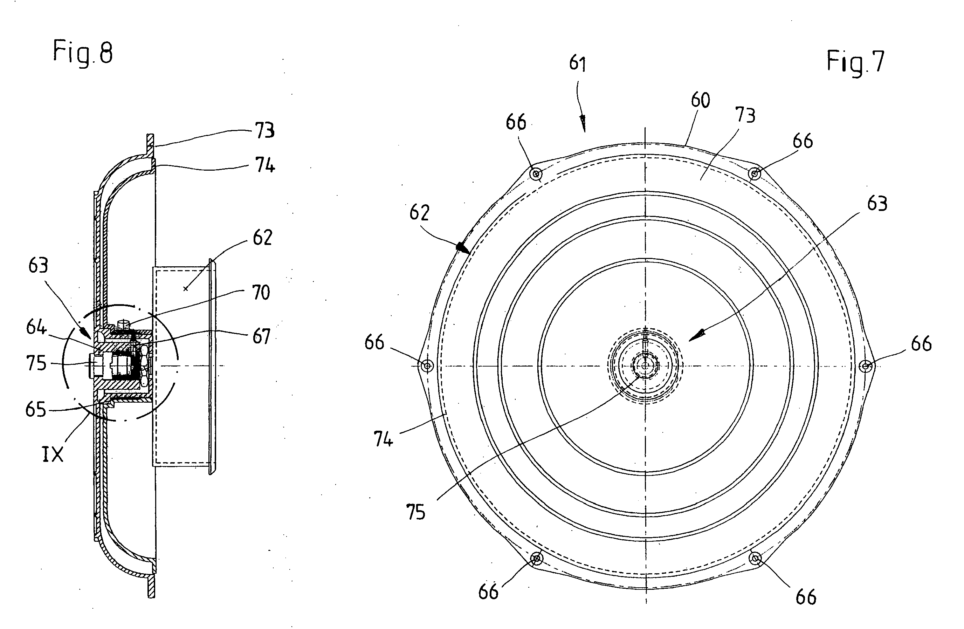

Fig. 7 zeigt eine Draufsicht auf ein Gehäuse 60 einer weiteren erfindungsgemäßen Vorrichtung 61. Das Gehäuse weist einen Gehäusedeckel 73 auf, der mittels Schraubverbindungen 66 mit einem nicht näher dargestellten rückwärtigen Gehäuseteil verbunden ist. In der vorliegenden Ausgestaltung ist das Gehäuse 60 im wesentlichen rund ausgebildet und umschließt eine im wesentlichen kreisförmige Walzeneinheit 62, die in Fig. 7 gestrichelt angedeutet ist. Zu erkennen ist mit gestrichelten Linien ebenfalls ein Innendeckel 74 der Walzeneinheit 62. Darüber hinaus ist zentrisch eine Anschlußbuchse 75 vorgesehen, an der eine nicht näher bezeichnete Signaleinrichtung mittels einer Steckverbindung anschließbar ist. Die Steckverbindung kann in bekannter Weise mittels Bananenstecker und entsprechender Steckhülse auf der Gegenseite oder dergleichen angeschlossen sein.

Fig. 8 zeigt die Vorrichtung in Fig. 7 in einer teilweise geschnittenen Darstellung. Zu erkennen ist die Walzeneinheit 62 mit ihrem Innendeckel 74, auf der das nicht näher dargestellte biegeelastische Kabel aufgerollt werden kann. Dies ist aus Gründen der Übersichtlichkeit nicht dargestellt. Lediglich der Leitungsanschluß 70 für das Kabel ist schematisch aus der Zeichnung ersichtlich.

Aus Fig. 8 ist ferner eine Kopplungseinheit 63 in Schnittansicht ersichtlich. Die Kopplungseinheit 63 befindet sich in einem zentralen Bereich der Vorrichtung 61 beziehungsweise des Gehäuses 60. Die Walzeneinheit 62 ist gegenüber dem Gehäuse 60 in der vorliegenden Ausgestaltung drehbar gelagert. Dies ist ebenfalls aus Übersichtlichkeitsgründen in der Zeichnung Fig. 8 nicht dargestellt. Bei Aufbeziehungsweise Abrollen des Kabels von der Walzeneinheit 62 dreht sich deshalb der Innendeckel 74 gegenüber dem Gehäusedeckel 73.

Die Kopplungseinheit 63 weist eine Einsatzeinheit 64 auf, die ihrerseits einen radial nach außen ragenden Kontaktstift 67 aufweist. Dieser steht im elektrischen Kontakt mit der axial zur Walzeneinheit 62 angeordneten Anschlußbuchse 75, so daß ein über die Anschlußbuchse 75 eingekoppeltes Signal elektrisch auf den Kontaktstift 67 übertragen wird.

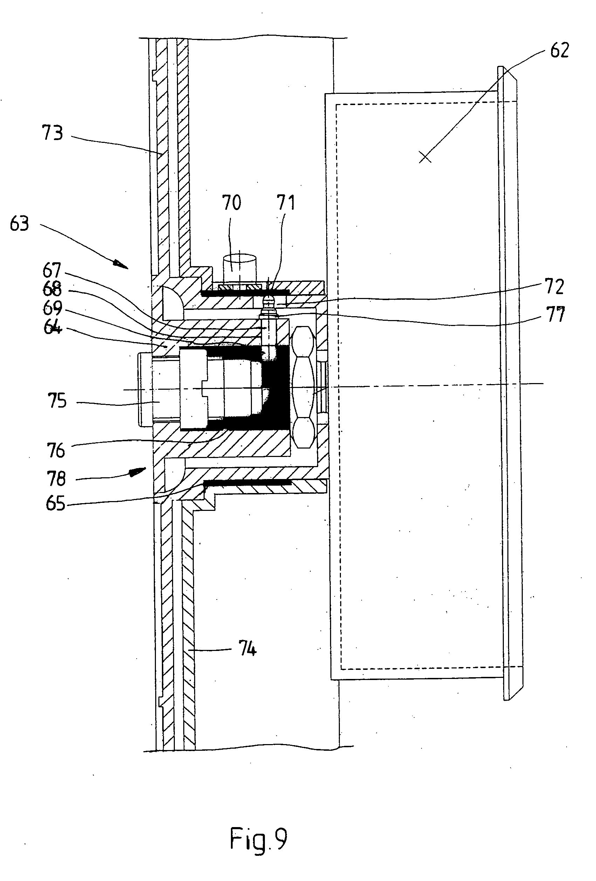

Im bezüglich der Walzeneinheit 62 axialen Bereich des Kontaktstifts 67 ist ein Schleifring 65 an einer Innenseite einer zylinderförmigen Einwölbung des Innendeckels 74 angeordnet. Im Durchmesser dazu angepaßt weist der Gehäusedeckel 73 ebenfalls eine zylindrische Ausformung auf, die in den Zylinder des Innendeckels 74 einsteckbar ist. Im Bereich des Kontaktstifts 67 ist eine Bohrung 72 vorgesehen, so daß der Kontaktstift 67 in elektrischen Kontakt mit dem Schleifring 65 treten kann (Fig. 9). Innendeckelseitig ist der Schleifring 65 mit dem Signalleiter 70 des Kabels elektrisch verbunden.

Fig. 8 zeigt ferner, daß im zentralen, zylindrischen Bereich des Gehäusedeckels 73 die Kopplungseinheit 63 in Form einer Einsatzeinheit 64 angeordnet ist. Vergrößert ist dies in Fig. 9 dargestellt. Die Einsatzeinheit 64 ist drehfest und in axialer Richtung im zylindrischen Bereich 78 des Gehäusedeckels 73 festgelegt. Die Einsatzeinheit 64 hält die Anschlußbuchse 75 ebenfalls drehfest und in axialer Richtung. Ferner weist die Einsatzeinheit 64 eine Bohrung 68 auf, in der ein Aufnahmebereich des Kontaktstifts 67 angeordnet ist. In der vorliegenden Ausgestaltung ist die Bohrung 68 radial zu einer Achse der Walzeneinheit 62 vorgesehen. Sie kann jedoch bedarfsweise auch seitlich versetzt hierzu vorgesehen sein, so daß eine Achse der Bohrung 68 nicht die Achse der Walzeneinheit 62 schneidet. In einem unteren Bereich der Bohrung 68 ist Spiralfeder 69 angeordnet, mit der der Kontaktstift 67 gegen den Schleifring 65 im montierten Zustand gedrückt wird. Der Kontaktstift 67 steht über eine Kontakthülse 76 in elektrischem Kontakt mit der Anschlußbuchse 75, die aus einem elektrisch leitfähigen Werkstoff gebildet ist, und auf diese Weise den elektrischen Kontakt zwischen der Anschlußbuchse 75 und dem Kontaktstift 67 herstellt. Aus Fig. 9 ist ferner ersichtlich, daß der Kontaktstift 67 in einem Kontaktbereich 71 eine gewölbte Oberfläche aufweist, um einen möglichst geringen Reibungswiderstand bei Drehung der Walzeneinheit 62 gegenüber dem Gehäuse 60 zu gewährleisten.

Es dürfte für den verständigen Fachmann klar sein, daß eine derartige Kontaktverbindung nicht für Energieversorgungszwecke geeignet ist. Zur Verbesserung der Zuverlässigkeit ist sowohl die Kontaktoberfläche des Schleifrings 65 als auch der Bereich 71 des Kontaktstifts 67 an seiner Oberfläche mit einer vergoldeten Beschichtung versehen, so daß eine zuverlässige Kontaktierung über die gewünschte Betriebsdauer erreicht werden kann.

In seinem mittleren Bereich weist der Kontaktstift 67 ferner einen Flansch 77 auf, mit dem eine maximale radiale Verschiebung des Kontaktstifts 67 in die Bohrung 68 hinein begrenzt wird. Hierdurch kann eine Überbeanspruchung der Spiralfeder 69 auf Druck bei der Montage beziehungsweise Demontage vermieden werden. Eine Überbeanspruchung der Spiralfeder 69 könnte nämlich dazu führen, daß der Kontaktstift 67 in seiner bestimmungsgemäßen Anordnung nicht mehr mit ausreichend Kraft gegen den Schleifring 65 gedrückt wird und es zu Kontaktproblemen im bestimmungsgemäßen Betrieb der Vorrichtung 61 kommt.

Das vorliegende Ausführungsbeispiel läßt eine einfache Montage und Wartung der erfindungsgemäßen Vorrichtung zu. Zum Austausch eines Kontaktstifts 67 wird einfach der Gehäusedeckel 73 mit der Einsatzeinheit 64 vollständig vom Innendeckel 74 abgezogen. Sobald der Kontaktstift 67 freiliegt, kann dieser ausgetauscht werden. Eine Montage kann in umgekehrter Reihenfolge ebenfalls einfach vorgenommen werden. Dabei ist lediglich zu berücksichtigen, daß beim Einführen des zylindrischen Bereichs des Gehäusedeckels 73 in den zylindrischen Bereich des Innendeckels 74 der Kontaktstift 67 vorzugsweise bis zum Flansch 77 in die Bohrung 68 eingedrückt ist, so daß der Kontaktstift 67 radial nicht über den Außenumfang des zylindrischen Bereichs des Außendeckels 73 hinausragt und auf diese Weise einfach in den zylindrischen Bereich des Innendeckels 74 eingeführt werden kann.

Natürlich kann die Vorrichtung 61 auch mit einer in dualer Weise ausgebildeten Kopplungseinheit 63 ausgerüstet sein, bei der die Anordnung des Kontaktstifts 67 und des Schleifrings 65 vertauscht sind. Auch können darüber hinaus zur weiteren Erhöhung der Zuverlässigkeit mehrere Kontaktstifte beziehungsweise Schleifringe vorgesehen sein, beispielsweise wenn mehr als eine einzige Signalleitung erforderlich ist oder wenn aus Gründen hoher Zuverlässigkeit eine Redundanz bezüglich der Kontakte vorzusehen ist.

Die Signaleinrichtung 46 kann beispielsweise durch einen Wechselspannungsgenerator gebildet sein. Dieser liefert ein elektrisches Signal in Form einer Wechselspannung, welches hinsichtlich Frequenz, Impulsform, Amplitude und/oder dergleichen einstellbar ist. Natürlich kann in dualer Weise auch ein Stromgenerator zum Einsatz kommen. Dies ist insbesondere dann von Vorteil, wenn der Verlauf des Kabels 39 im Kanal detektiert werden soll.

Die in den Figuren dargestellten Ausführungsbeispiele dienen lediglich der Erläuterung der Erfindung und sind für diese nicht beschränkend. So können einzelne Merkmale miteinander variiert oder auch in unterschiedlichen Kombinationen miteinander verwendet werden.

**Bezugszeichenliste:**

| | | | |
|---|---|---|---|
| 1 | Vorrichtung | 40 | Glasfaserstab |
| 2 | Speichertrommel | 41 | Ummantelung |
| 3 | Schale | 42 | Signalleiter |
| 4 | Schale | 43 | freies Ende |
| 5 | Schraubbolzen | 44 | Spule |
| 6 | Mutter | 45 | Anschlußbuchse |
| 7 | Schale | 46 | Energieeinrichtung |
| 8 | Schale | 47 | Schiebeschalter |
| 9 | Schraubbolzen | 48 | Steckkontakt |
| 10 | Mutter | 49 | Steckeröffnung |
| 11 | Achse | 50 | Zuleitung |
| 12 | Bohrung | 51 | Oberfläche |
| 13 | Ansatz | 52 | Energieschiene |
| 14 | Mutter | 53 | Energieabnehmer |
| 15 | Kappe | 54 | Zuleitung |
| 16 | Öffnung | 55 | Fuß |
| 17 | Öffnung | 56 | Fläche |
| 18 | Einsatz | 57 | Bügel |
| 19 | Aufnahmeraum | 58 | Gelenk |
| 20 | Vorsprung | 59 | Druckfeder |
| 21 | Vorsprung | 60 | Gehäuse |
| 22 | Zwischenwandung | 61 | Vorrichtung |
| 23 | Abschnitt | 62 | Walzeneinheit |
| 24 | Kunststoffflasche | 63 | Kopplungseinheit |
| 25 | Kupplungselement | 64 | Einsatzeinheit |
| 26 | Aufsatzelement | 65 | Schleifring |
| 27 | Öffnung | 66 | Schraubverbindung |
| 28 | Handgriff | 67 | Kontaktstift |
| 29 | Randbereich | 68 | Bohrung |
| 30 | Deckel | 69 | Spiralfeder |
| 31 | Steckachse | 70 | Signalleiter |
| 32 | Eingriffsöffnung | 71 | Kontaktbereich |
| 33 | Vorsprung | 72 | Bohrung |
| 34 | Ausnehmung | 73 | Gehäusedeckel |
| 35 | Boden | 74 | Innendeckel (an Walze befestigt) |
| 36 | Seitenwandung | 75 | Anschlußbuchse |
| 37 | Ansatz | 76 | Kontakthülse |
| 38 | Bolzen | 77 | Flansch |
| 39 | Kabel | 78 | Bereich |

## Patentansprüche

1. Prüf- und Montagevorrichtung (1, 61) mit einer in einem Gehäuse (60) drehbar gelagerten Speichertrommel (2, 62), an der ein erstes Ende eines biegeelastischen, schubsteifen Kabels (39), nämlich eines Schub- und Zugdrahtes aufwickelbar an der Speichertrommel (2, 62) befestigt ist, **gekennzeichnet durch**
- eine drehfest gegenüber dem Gehäuse (60) angeordnete Signaleinrichtung (46), die als Signal eine physikalische Größe für Prüf- und Ortungszwecke erzeugt,
- wenigstens einen im Bereich des ersten Endes des Kabels (39) angeordneten, elektrisch leitfähigen Signalleiter (42, 70), der zur Führung, Abstrahlung und/oder Empfang des Signals dient und an die Übertragungseigenschaften des Signals angepasst ausgebildet ist,
- eine an die physikalischen Signaleigenschaften angepasste Kopplungseinheit (52, 53, 63), die der kommunikationstechnischen Kopplung zwischen dem Signalleiter (42, 70) und der Signaleinrichtung (46) dient,
wobei die Kopplungseinheit (52, 53, 63) wenigstens zwei in elektrischer, kapazitiver und/oder induktiver Wirkverbindung stehende elektrisch leitfähige Kopplungselemente (52, 53, 65, 67) aufweist, wobei eines der Kopplungselemente mit dem Signalleiter (42, 70) und das zweite mit der Signaleinrichtung (45) in elektrischer Verbindung steht, und wobei die Kopplungselemente (52, 53, 65, 67) mechanisch benachbart so angeordnet sind, dass eine Bewegung zwischen dem Gehäuse (60) und der Speichertrommel (2, 62) ermöglicht wird.

2. Vorrichtung nach Anspruch 1, **dadurch gekennzeichnet, dass** der Signalleiter (42, 70) von einem Werkstoff des Kabels (39) umgeben ist.

3. Vorrichtung nach Anspruch 1 oder 2, **dadurch gekennzeichnet, dass** das Kabel (39) einen Glasfaser- und/oder Karbonfaserverbund aufweist.

4. Vorrichtung nach einem der Ansprüche 1 bis 3, **dadurch gekennzeichnet, dass** das Kabel (39) an seinem zweiten Ende ein Anschlagelement aufweist.

5. Vorrichtung nach einem der Ansprüche 1 bis 4, **dadurch gekennzeichnet, dass** das Gehäuse (60) eine Führungseinheit aufweist.

6. Vorrichtung nach einem der Ansprüche 1 bis 5, **dadurch gekennzeichnet, dass** das Gehäuse (60) eine Aufrolleinheit aufweist.

7. Vorrichtung nach einem der Ansprüche 1 bis 6, **dadurch gekennzeichnet, dass** das Kabel (39) im Bereich seines zweiten Endes eine Klemmeinheit aufweist.

8. Vorrichtung nach einem der Ansprüche 1 bis 7, **dadurch gekennzeichnet, dass** das Kabel (39) im Bereich seines zweiten Endes eine Sendeeinheit (44) aufweist.

9. Vorrichtung nach einem der Ansprüche 1 bis 8, **dadurch gekennzeichnet, dass** das Kabel (39) im Bereich seines zweiten Endes eine Sensoreinheit aufweist.

10. Vorrichtung nach einem der Ansprüche 1 bis 9, **dadurch gekennzeichnet, dass** wenigstens ein Kopplungselement (65) ringförmig ausgebildet ist.

11. Vorrichtung nach einem der Ansprüche 1 bis 10, **dadurch gekennzeichnet, dass** die Kopplungselemente einen Transformator bilden.

12. Vorrichtung nach einem der Ansprüche 1 bis 11, **dadurch gekennzeichnet, dass** wenigstens ein Kopplungselement (67) im Wesentlichen stiftförmig ausgebildet ist.

13. Vorrichtung nach Anspruch 12, **dadurch gekennzeichnet, dass** das stiftförmige Kopplungselement im Wesentlichen radial zur Walzeneinheit (62) verschiebbar gelagert ist.

14. Vorrichtung nach einem der Ansprüche 1 bis 13, **dadurch gekennzeichnet, dass** das Kopplungselement durch ein Kontaktelement gebildet ist.

15. Vorrichtung nach Anspruch 14, **dadurch gekennzeichnet, dass** das Kontaktelement (67) in einem Kontaktbereich eine Wölbung aufweist.

16. Vorrichtung nach Anspruch 14 oder 15, **dadurch gekennzeichnet, dass** wenigstens ein Kontaktelement zumindest im Kontaktbereich eine Beschichtung aufweist.

17. Vorrichtung nach einem der Ansprüche 14 bis 16, **dadurch gekennzeichnet, dass** das Kontaktelement (67) stiftförmig ausgebildet ist und durch eine axiale Bewegung der Walzeneinheit (62) in Bezug auf das Gehäuse (60) radial verschiebbar ist.

## Claims

1. A testing and mounting device (1, 61) comprising a storage drum (2, 62) which is mounted in a rotatable manner in a housing (60), to which device a first end of a flexible cable (39) having a shear rigidity, namely a shear and taut wire, is attached to the storage drum (2, 62) such that it can be wound up, **characterized by**
- a signalling device (46) which is arranged in a rotation-proof manner with respect to the housing (60) and which generates as a signal a physical quantity for testing and localisation purposes,
- at least one electrically conductive signal conductor (42, 70) arranged in the area of the first end of the cable (39), which signal conductor serves to guide, emit and/or receive the signal and is adapted to the transmission properties of the signal,
- a coupling unit (52, 53, 63) adapted to the physical signal properties, which coupling unit serves to the communication coupling between the signal conductor (42, 70) and the signalling device (46), wherein the coupling unit (52, 53, 63) comprises at least two electrically conductive coupling elements (52, 52, 65, 67), which are in an electric, capacitive and/or inductive operative connection with each other, wherein one of the coupling elements is in electric connection with the signal conductor (42, 70) and the second one is in electric connection with the signalling device (46), and wherein the coupling elements (52, 53, 65, 67) are arranged mechanically adjacent to each other such that a movement between the housing (60) and the storage drum (2, 62) will be enabled.

2. A device according to claim 1, **characterized in that** the signal conductor (42, 70) is enclosed by a material of the cable (39).

3. A device according to claim 1 or 2, **characterized in that** the cable (39) comprises a glass fibre and/or carbon fibre composite.

4. A device according to one of the claims 1 through 3, **characterized in that** the cable (39) comprises a stop element at its second end.

5. A device according to one of the claims 1 through 4, **characterized in that** the housing (60) comprises a guiding unit.

6. A device according to one of the claims 1 through 5, **characterized in that** the housing (60) comprises a rolling-up unit.

7. A device according to one of the claims 1 through 6, **characterized in that** the cable (39) comprises a clamping unit in the area of its second end.

8. A device according to one of the claims 1 through 7, **characterized in that** the cable (39) comprises a sender unit (44) in the area of its second end.

9. A device according to one of the claims 1 through 8, **characterized in that** the cable (39) comprises a sensor unit in the area of its second end.

10. A device according to one of the claims 1 through 9, **characterized in that** at least one coupling element (65) is of annular design.

11. A device according to one of the claims 1 through 10, **characterized in that** the coupling elements form a transformer.

12. A device according to one of the claims 1 through 11, **characterized in that** at least one coupling element (67) is essentially of pin-shaped design.

13. A device according to claim 12, **characterized in that** the pin-shaped coupling element is essentially arranged such that it is radially displaceable with respect to the roll unit (62).

14. A device according to one of the claims 1 through 13, **characterized in that** the coupling element is formed by a contact element.

15. A device according to claim 14, **characterized in that** the contact element (67) comprises a curvature in a contact area.

16. A device according to claim 14 or 15, **characterized in that** at least one contact element comprises a coating in at least the contact area.

17. A device according to one of the claims 14 through 16, **characterized in that** the contact element (67) is of pin-shaped design and can be radially displaced by an axial movement of the roll unit (62) with respect to the housing (60).

## Revendications

1. Dispositif d'essai et de montage (1, 61) comprenant un tambour de stockage (2, 62) monté de manière rotative dans un boîtier (60), dans lequel dispositif une première extrémité d'un câble élastique en flexion et rigide en poussée (39), à savoir un fil de poussée et de traction, est fixée au tambour de stockage (2, 62) de sorte qu'il peut être enroulé,
**caractérisé par**
- un dispositif de signalisation (46), qui est disposé de manière fixe en rotation par rapport au boîtier (60) et qui génère une grandeur physique comme signal pour effectuer des essais et des localisations,
- au moins un conducteur de signal (42, 70) qui est électriquement conducteur et qui est disposé dans la zone de la première extrémité du câble (39), lequel conducteur de signal sert à guider, à émettre et/ou à recevoir le signal et est adapté aux caractéristiques de transmission du signal,
- une unité d'accouplement (52, 53, 63) adaptée aux caractéristiques physiques de signal, laquelle unité d'accouplement sert au couplage sur le plan de communication entre le conducteur de signal (42, 70) et le dispositif de signalisation (46), l'unité d'accouplement (52, 53, 63) comprenant au moins deux éléments d'accouplement (52, 53, 65, 67) électriquement conducteurs, qui sont en liaison fonctionnelle électrique, capacitive et/ou inductive l'un avec l'autre, l'un des éléments d'accouplement étant en liaison électrique avec le conducteur de signal (42, 70) et le deuxième élément étant en liaison électrique avec le dispositif de signalisation (46), et les éléments d'accouplement (52, 53, 65, 67) étant disposés mécaniquement adjacents l'un à l'autre de sorte qu'un déplacement entre le boîtier (60) et le tambour de stockage (2, 62) est rendu possible.

2. Dispositif selon la revendication 1, **caractérisé en ce que** le conducteur de signal (42, 70) est entouré par un matériau du câble (39).

3. Dispositif selon la revendication 1 ou la revendication 2, **caractérisé en ce que** le câble (39) comprend un matériau composite en fibres de verre et/ou fibres de carbone.

4. Dispositif selon l'une des revendications 1 à 3, **caractérisé en ce que** le câble (39) comprend un élément de butée à sa deuxième extrémité.

5. Dispositif selon l'une des revendications 1 à 4, **caractérisé en ce que** le boîtier (60) comprend une unité de guidage.

6. Dispositif selon l'une des revendications 1 à 5, **caractérisé en ce que** le boîtier (60) comprend une unité d'enroulement.

7. Dispositif selon l'une des revendications 1 à 6, **caractérisé en ce que** le câble (39) comprend une unité de serrage dans la zone de sa deuxième extrémité.

8. Dispositif selon l'une des revendications 1 à 7, **caractérisé en ce que** le câble (39) comprend une unité d'émission (44) dans la zone de sa deuxième extrémité.

9. Dispositif selon l'une des revendications 1 à 8, **caractérisé en ce que** le câble (39) comprend une unité de capteur dans la zone de sa deuxième extrémité.

10. Dispositif selon l'une des revendications 1 à 9, **caractérisé en ce qu'**au moins un élément d'accouplement (65) est configuré en forme annulaire.

11. Dispositif selon l'une des revendications 1 à 10, **caractérisé en ce que** les éléments d'accouplement forment un transformateur.

12. Dispositif selon l'une des revendications 1 à 11, **caractérisé en ce qu'**au moins un élément d'accouplement (67) est essentiellement configuré en forme d'épingle.

13. Dispositif selon la revendication 12, **caractérisé en ce que** l'élément d'accouplement en forme d'épingle est essentiellement disposé de sorte qu'il est radialement déplaçable par rapport à l'unité de rouleaux (62).

14. Dispositif selon l'une des revendications 1 à 13, **caractérisé en ce que** l'élément d'accouplement est formé par un élément de contact.

15. Dispositif selon la revendication 14, **caractérisé en ce que** l'élément de contact (67) comprend une courbure dans une zone de contact.

16. Dispositif selon la revendication 14 ou la revendication 15, **caractérisé en ce qu'**au moins un élément de contact comprend un revêtement au moins dans la zone de contact.

17. Dispositif selon l'une des revendications 14 à 16, **caractérisé en ce que** l'élément de contact (67) est configuré en forme d'épingle et peut être déplacé radialement par un mouvement axial de l'unité de rouleaux (62) par rapport au boîtier (60).
